(19) Europäisches Patentamt
European Patent Office
Office européen des brevets

(11) **EP 2 522 868 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(51) Int Cl.:
***F16C 32/04*** *(2006.01)*

(21) Anmeldenummer: **11165841.5**

(22) Anmeldetag: **12.05.2011**

(54) **Verfahren zum Betrieb eines dreiphasigen Wechselrichters eines umrichtergespeisten Magnetlagers**

Method for operating a tri-phase inverter of a converter-fed magnetic bearing

Procédé de commande de l'onduleur triphasé d'un palier magnétique alimenté par un convertisseur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.11.2012 Patentblatt 2012/46**

(73) Patentinhaber: **Siemens Aktiengesellschaft 80333 München (DE)**

(72) Erfinder:
• **Denk, Joachim
10777, Berlin (DE)**
• **Köpken, Hans-Georg
91056, Erlangen (DE)**
• **Stoiber, Dietmar
90763, Fürth (DE)**
• **Viering, Frank
90763, Fürth (DE)**

(56) Entgegenhaltungen:
EP-A1- 1 158 648          EP-A1- 2 131 052
EP-A2- 0 920 109          WO-A1-97/07341
DE-A1- 10 019 761         DE-B3-102007 028 229
US-A1- 2007 216 244

**Beschreibung**

Die Erfindung bezieht sich auf ein Verfahren zum Betrieb eines dreiphasigen Wechselrichters eines umrichtergespeisten Magnetlagers, dessen an einem oberen Magnetanker befindliche Spule mit ihrem ersten Anschluss mit einem ersten Ausgang des Wechselrichters verknüpft ist und dessen an einem unteren Magnetanker befindliche Spule mit ihrem ersten Anschluss mit einem zweiten Ausgang des Wechselrichters verknüpft ist und die beiden Spulen mit ihrem jeweiligen zweiten Anschluss mit einem dritten Ausgang des Wechselrichters verknüpft sind.

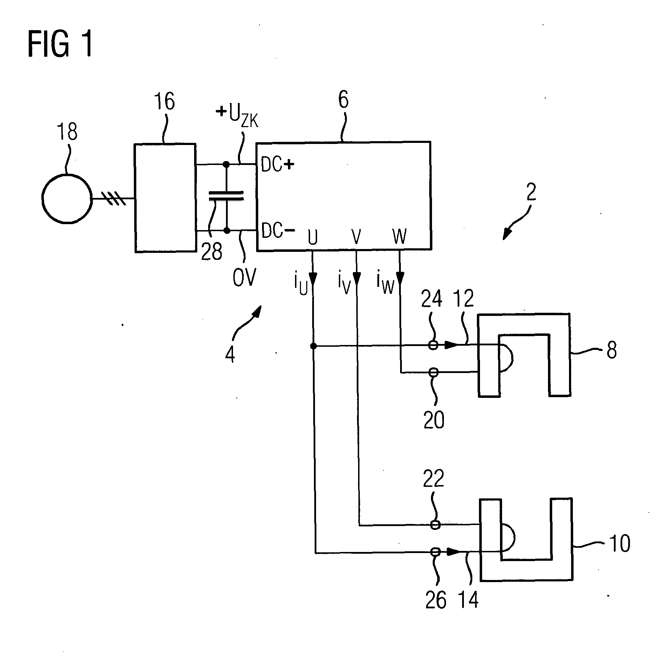

Ein derartiges umrichtergespeistes Magnetlager ist aus der DE 10 2007 028 229 B3 bekannt. Ein derartiges umrichtergespeistes Magnetlager ist in FIG 1 näher dargestellt. In dieser FIG 1 sind mit 2 ein umrichtergespeistes Magnetlager, mit 4 ein Umrichter, mit 6 ein Wechselrichter, mit 8 ein oberer Magnetanker, mit 10 ein unterer Magnetanker, mit 12 eine Spule des oberen Magnetankers 8, mit 14 eine Spule des unteren Magnetankers 10, mit 16 eine Einspeiseeinheit des Umrichters 4 und mit 18 ein speisendes Netz bezeichnet. In dieser Darstellung ist die Spule 12 des oberen Magnetankers 8 mit einem ersten Anschluss 20 mit einem Ausgang W des Wechselrichters 6 verbunden, wobei ein erster Anschluss 22 der Spule 14 des unteren Magnetankers 10 mit einem Ausgang V des Wechselrichters 6 verknüpft ist. Die zweiten Anschlüsse 24 und 26 der beiden Spulen 12 und 14 sind miteinander und mit einem dritten Ausgang U des Wechselrichters 6 verbunden. Der Umrichter 4 weist neben dem Wechselrichter 6 auch noch eine Einspeiseeinheit 16 auf, die wechselspannungsseitig mit einem speisenden Netz 18 verbunden ist. Die Einspeiseeinheit 16 ist gleichspannungsseitig mit gleichspannungsseitgen Anschlüssen DC+ und DC- des Wechselrichters 6 verknüpft. Der Wechselrichter 6 ist im Handel als Motormodul für ein handelsübliches Umrichtergerät erhältlich.

Ein derartiges Umrichtergerät wird normalerweise zum Ansteuern eines Drehstrommotors verwendet. Damit ein Drehstrommmotor, insbesondere ein Synchronmotor, entsprechend Vorgaben in Drehzahl- bzw. Drehmoment geregelt werden kann, weist dieses Motormodul eine feldorientierte Regelung auf. Das heißt, diese Regelung weist zwei Regelkanäle auf, nämlich einen Kanal für eine so genannte feldorientierte Stromkomponente, die allgemein als d-Komponente eines rotierenden Stromvektors bezeichnet wird, und einen Kanal für eine so genannte drehmomentbildende Stromkomponente, die allgemein als q-Komponente eines rotierenden Stromvektors bezeichnet wird. Gemäß dem genannten nationalen Patent werden diese beiden unabhängig voneinander zu erzeugenden Stromkomponenten für eine Differenzansteuerung eines Magnetlagers verwendet. Der d-Komponente wird dabei die Funktion eines Konstantstroms zur Vormagnetisierung zugewiesen, wobei der q-Komponente die Rolle des Steuerstroms des Magnetlagers obliegt, mit der die Krafteinwirkung gesteuert wird.

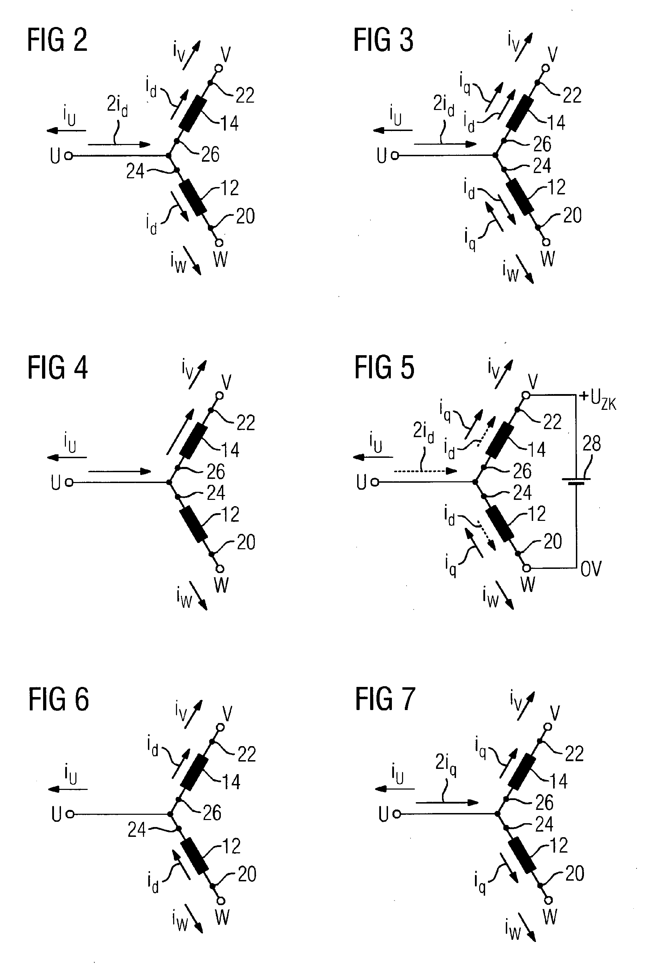

Aus dieser DE 10 2007 028 229 B3 ist eine Betriebsweise des umrichtergespeisten Magnetlagers 2 gemäß FIG 1 bekannt, die anhand der FIG 2 bis 4 näher erläutert wird:

Gemäß dieser Betriebsweise wird ein Transformationswinkel (Rotorlagewinkel eines Synchronmotors) der feldorientierten Regelung des Wechselrichters 6 so eingefroren, dass für den Wechselrichter 6 der Zustand entsteht, als ob die magnetische Achse eines angetriebenen Motors fest und unveränderlich in eine bestimmte Richtung des Ständers, beispielsweise in Richtung der Phase am Ausgang U, zeigt. Mittels dieses Transformationswinkels (Rotorlagewinkel) wird bei der feldorientierten Regelung des Motormoduls ein ständerorientiertes rechtwinkliges $\alpha/\beta$-System in ein läuferorientiertes d/q-System transformiert, das mit einer Läuferkreisfrequenz umläuft.

Dieser Rotorlagewinkel wird auch wieder für die Rücktransformation benötigt. Dieser Transformationswinkel (Rotorlagewinkel) verändert sich während eines Umlaufs des Rotors, weswegen der veränderliche Rotorlagewinkel auch als Drehfeldwinkel bezeichnet wird.

Bei der Betriebsweise des Wechselrichters 6 als Einspeiseeinheit für ein Magnetlager ist dieser Transformationswinkel derart eingefroren, dass die flussbildende Achse fest und unveränderlich in Richtung der Phase des Ausgangs U des dreiphasigen Wechselrichters zeigt. Das heißt, der Transformationswinkel ist konstant auf Null Grad vorgegeben.

In dieser Festlegung des Transformationswinkels fließt die d-Stromkomponente $i_d$ dann zu gleichen Teilen in die Phasenleiter an den Ausgängen V und W. Somit ist der Phasenstrom $i_u$ in der Phase am Ausgang U des dreiphasigen Wechselrichters (FIG 2) doppelt so groß wie der Strom $i_d$. Die Pfeilrichtungen in FIG 2 zeigen an, in welcher Richtung ein Strom als positiv gewertet werden soll. Die q-Stromkomponente $i_q$ hingegen fließt aus der Phase am Ausgang W direkt in die Phase am Ausgang V des dreiphasigen Wechselrichters, wobei die Phase am Ausgang U dieses dreiphasigen Wechselrichters nicht betroffen ist (FIG 3). In der FIG 4 ist die Addition der d- und q-Stromkomponenten $i_d$ und $i_q$ bei Vollaussteuerung des umrichtergespeisten Magnetlagers dargestellt.

Für die thermische Belastung des Wechselrichters 6 ist der Effektivstrom ausschlaggebend. Unter dem Effektivstrom kann man denjenigen Gleichstrom verstehen, der eine äquivalente Wärmeleistung in einem gedachten 1-Ohm-Widerstand erzeugen würde. Da der Wechselrichter 6 drei Phasenströme abgibt, wirkt ein zugehöriger Ersatzgleichstrom in drei Widerständen mit je 1 Ohm. Bei Betrieb mit $i_d$=10A aus dem Ausgang U des Wechselrichters 6 ein Strom $i_u$=-20A und in die Ausgänge V und W des Wechselrichters 6 jeweils ein Strom $i_v$=10A und $i_w$=10A. Es ergibt sich ein Effektivstrom von 14, 14A$_{eff}$.

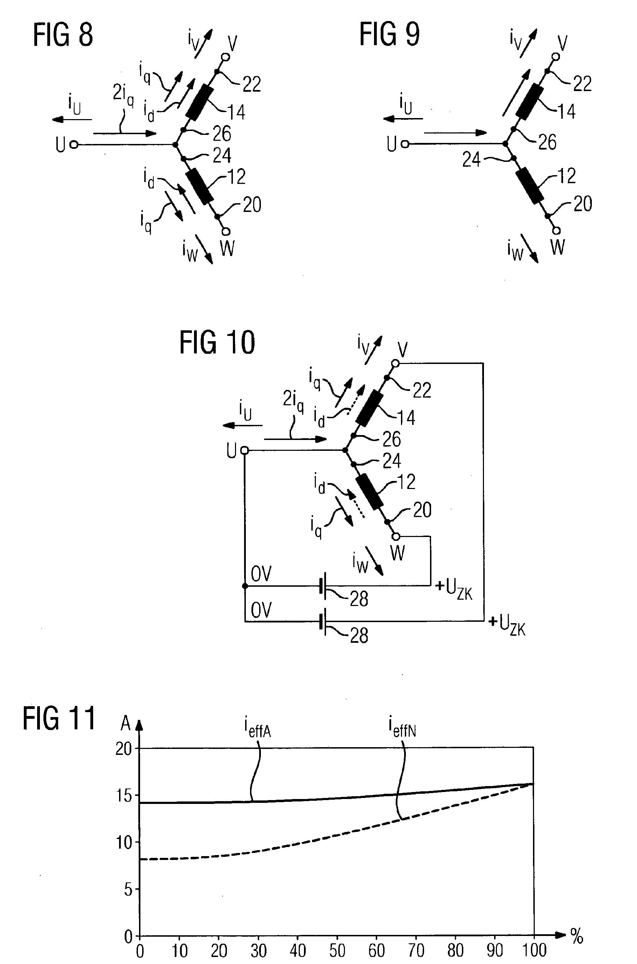

Bei Magnetlagern wird allgemein die Vollaussteuerung so festgelegt, dass bei Vollaussteuerung die Durchflutung (Ampere-Windungszahl) beispielsweise in der Spule 12 des oberen Magnetankers des Magnetlagers 2 gerade verschwindet, während sie sich in der Spule 14 des unteren Magnetankers dieses Magnetlagers gegenüber einer Grunddurchflutung verdoppelt (FIG 4). Bei Vollaussteuerung des Magnetlagers weist der Effektivstrom mit den bereits angegebenen Stromwerten einen Wert von 16,33 A$_{eff}$ auf. Das heißt, der Effektivwert verändert sich zwischen den Zuständen Vormagnetisierung und Vollaussteuerung nur minimal (FIG 11). Gemäß dieser bekannten Betriebsweise wird der Vormagnetisierungsstrom (d-Stromkomponente) gemäß dem bekannten Betriebsverfahren (DE 10 2007 028 229 B3) in der Phase am Ausgang U des Wechselrichters 6 eingeprägt.

Nach der Effektivstrombelastung des Wechselrichters 6 ist die Geschwindigkeit der Stromänderung ein wichtiges Merkmal einer Magnetlageransteuerung. Je schneller das Magnetlager den Steuerstrom und damit die Kraft ändern kann, desto besser kann es auf eine dynamische Kraftanforderung, wie beispielsweise Unwucht oder eine plötzlich einwirkende äußere Belastung, reagieren.

Die Geschwindigkeit der Stromänderung ist proportional zur Spannungsdifferenz, die an die beiden Anschlüsse 22 und 20 der beiden Spulen 14 und 12 des umrichtergespeisten Magnetlagers 2 gelegt werden kann. der Wechselrichter 6 kann als maximale Spannungsdifferenz die an seinen gleichspannungsseitigen Anschlüssen DC+ und DC- anstehende Zwischenkreisspannung $U_{ZK}$ beliebig an seinen Ausgängen U, V und W anlegen. Die Zwischenkreisspannung $U_{ZK}$ wird von einem Zwischenkreis-Kondensator 28 des Umrichters 4, der deswegen auch als Spannungszwischenkreis-Umrichter bezeichnet wird, angeboten. Bei einer Zwischenkreisspannung $U_{ZK}$ handelt es sich um eine gleichgerichtete Netzspannung, die mittels der Einspeiseeinheit 16 generiert wird. Bei der Magnetlagersteuerung gemäß der DE 10 2007 028 229 B3 fließt der Steuerstrom ($i_q$-Stromkomponente des Wechselrichters) zwischen den Ausgängen V und W des dreiphasigen Wechselrichters 6. Die schnellste Änderung dieses Steuerstroms wird erreicht, wenn der Wechselrichter 6 derart angesteuert wird, dass sein Ausgang W mit dem Bezugspotential des Spannungszwischenkreises und sein Ausgang V mit einem positiven Potential des Spannungszwischenkreises des Umrichters 4 verbunden ist. Gemäß dieser Steuerung steht die Zwischenkreisspannung $U_{ZK}$ an den Ausgängen V und W des dreiphasigen Wechselrichters 6 an, und ist somit an der Reihenschaltung der beiden Spulen 12 und 14 des umrichtergespeisten Magnetlagers 2 angelegt (FIG 5). Wird angenommen, dass die beiden Spulen 12 und 14 dieses Magnetlagers 2 jeweils eine Induktivität L haben, ergibt sich die Stromanstiegsgeschwindigkeit gemäß folgender Gleichung:

$$\frac{\Delta I}{\Delta t} = \frac{U_{ZK}}{2 \cdot L}$$

Somit steht der Stromänderung, die durch die Spannung $U_{ZK}$ getrieben wird, die beiden Induktivitäten L der beiden elektrisch in Reihe geschalteten Spulen 12 und 14 des Magnetlagers entgegen.

Der Erfindung liegt nun die Aufgabe zugrunde, das Betriebsverfahren des umrichtergespeisten Magnetlagers derart weiterzubilden, dass sich der Effektivstrom wesentlich erniedrigt und eine möglichst hohe Stromanstiegsgeschwindigkeit erreicht wird.

Diese Aufgabe wird mit den kennzeichnenden Merkmalen des Verfahrens zum Betrieb eines dreiphasigen Wechselrichters eines umrichtergespeisten Magnetlagers gemäß Anspruch 1 erfindungsgemäß gelöst.

Das erfindungsgemäße Verfahren zum Betrieb eines dreiphasigen Wechselrichters eines umrichtergespeisten Magnetlagers ist dadurch gekennzeichnet, dass ein veränderlicher Steuerstrom des Magnetlagers in einem Ausgang und ein konstanter Vormagnetisierungsstrom des Magnetlagers als Differenz der Ströme in zwei weiteren Ausgängen eingeprägt werden. Durch diese Betriebsweise des dreiphasigen Wechselrichters ist die Stromrichtung der d-Stromkomponente in den Phasen der Ausgänge V und W des Wechselrichters zueinander unterschiedlich. Gleichzeitig wird die q-Stromkomponente in der Phase des Ausganges U des Wechselrichters eingeprägt, von wo aus sich diese zu gleichen Teilen auf die Phasen der Ausgänge V und W des dreiphasigen Wechselrichters aufteilt. Dadurch tritt die q-Stromkomponente in diesen beiden Phasen der Ausgänge V und W des dreiphasigen Wechselrichters mit demselben Vorzeichen auf.

Durch diese Stromverteilung addieren sich die d- und q-Stromkomponenten in der Phase des Ausgangs V des dreiphasigen Wechselrichters, wogegen sie sich gegenseitig in der Phase des Ausgangs W des dreiphasigen Wechselrichters auslöschen. Da gegenüber der bekannten Stromsteuerung die Richtung der d-Stromkomponente in der Phase des Ausgangs W des dreiphasigen Wechselrichters durch die erfindungsgemäße Stromverteilung invertiert ist, und in der Phase des Ausgangs U des dreiphasigen Wechselrichters keine d-Stromkomponente mehr fließt, verringert sich der Effektivstrom, und damit die Effektivstrombelastung des dreiphasigen Wechselrichters erheblich. Durch die Einspeisung der q-Stromkomponente in der Phase des Ausgangs U des Wechselrichters teilt sich diese auf die beiden anderen Phasen der Ausgänge V und W des dreiphasigen Wechselrichters zu gleichen Teilen auf. Im Zusammenwirken mit den d-Stromkomponenten wird die Durchflutung in der Phase des Ausgangs V des dreiphasigen Wechselrichters verstärkt, wogegen diese in der Phase des Ausgangs W des dreiphasigen Wechselrichters abgebaut wird. Bei Vollaussteuerung des Magnetlagers ergibt sich gegenüber der bekannten Stromverteilung eines dreiphasigen Wechselrichters eines umrichtergespeisten Magnetlagers kein Unterschied.

Somit wird keine Veränderung in einer gewünschten Kraftwirkung des umrichtergespeisten Magnetlagers, aber eine Entlastung des Wechselrichters dieses Umrichters, der das Magnetlager speist, im überwiegenden Teil des Betriebsbereiches erreicht.

Durch die erfindungsgemäße Zuweisung des d-Stroms (Vormagnetisierungsstrom des Magnetlagers) und des q-Stroms (Steuerstrom des Magnetlagers) ist der Transformationswinkel der feldorientierten Regelung des Wechselrichters des umrichterspeisenden Magnetlagers so eingefroren, dass für diesen Wechselrichter der Zustand entsteht, als ob die magnetische Achse fest und unveränderlich in eine bestimmte Richtung des ständerorientierten Koordinatensystem zeigt. Gegenüber der bekannten Stromzuweisung ist diese magnetische Achse um 90° gedreht. Gegenüber dem bekannten Verfahren zum Betrieb eines dreiphasigen Wechselrichters eines umrichtergespeisten Magnetlagers wird der Transformationswinkel anstatt konstant mit 0° nun konstant mit 90° vorgegeben.

Zur weiteren Erläuterung der Erfindung wird auf die Zeichnung Bezug genommen, in der das erfindungsgemäße Verfahren zum Betrieb eines dreiphasigen Wechselrichters eines umrichtergespeisten Magnetlagers schematisch erläutert wird.

FIG 1    zeigt ein Ersatzschaltbild eines umrichtergespeisten Magnetlagers nach dem Stand der Technik, die

FIG 2    zeigt die Verteilung einer d-Stromkomponente auf zwei Spulen des Magnetlagers nach FIG 1, in

FIG 3    ist zusätzlich die Verteilung einer q-Stromkomponente zur d-Stromkomponenten-Verteilung gemäß FIG 2 dargestellt, die

FIG 4    zeigt eine resultierende Stromkomponenten-Verteilung, die sich aus den d- und q-Stromkomponenten-Verteilungen der FIG 3 ergibt, die

FIG 5    zeigt eine Anschaltung des Zwischenkreises des Umrichters des Magnetlagers für eine maximale Stromanstiegsgeschwindigkeit des Steuerstroms, die

FIG 6    zeigt die Verteilung der d-Stromkomponente auf zwei Spulen des Magnetlagers nach FIG 1 gemäß dem erfindungsgemäßen Verfahrens, in der

FIG 7    ist die Verteilung der q-Stromkomponente dargestellt, die sich gemäß dem erfindungsgemäßen Verfahren einstellt, wobei in der

FIG 8    die Verteilung der d- und q-Stromkomponenten der FIG 6 und 7 gemeinsam dargestellt sind, die

FIG 9    zeigt eine resultierende Stromkomponenten-Verteilung, die sich aus den d- und q-Stromkomponenten-Verteilungen der FIG 6 und 7 bzw. der FIG 8 ergibt, die

FIG 10   zeigt eine Anschaltung des Zwischenkreises des Umrichters des Magnetlagers für eine maximale Stromanstiegsgeschwindigkeit des Steuerstroms infolge des erfindungsgemäßen Verfahrens, und die

FIG 11   zeigt in einem Diagramm jeweils einen Verlauf eines Effektivstroms über den Aussteuergrad, die sich ergeben bei der bekannten und der erfindungsgemäßen Zuweisung der d- und q-Stromkomponenten in den Spulen eines umrichtergespeisten Magnetlagers nach FIG 1.

Durch die erfindungsgemäße Vorgabe des Transformationswinkel einer feldorientierten Regelung des dreiphasigen Wechselrichters 6 des Umrichters 4, der ein Magnetlager 2 speist, auf 90°, ergibt sich die Verteilung der d-Stromkomponente (Vormagnetisierungsstrom des Magnetlagers) entsprechend der Darstellung in FIG 6. Durch den erfindungsgemäßen Transformationswinkel wird die d-Stromkomponente $i_d$ als konstanter Vormagnetisierungsstrom in den Phasen der Ausgängen V und W des dreiphasigen Wechselrichters 6 eingeprägt. Dadurch sind die Stromrichtungen in den Phasen der Ausgänge V und W des dreiphasigen Wechselrichters 6 der d-Stromkomponente $i_d$ zueinander entgegengesetzt. Durch die erfindungsgemäße Vorgabe des Transformationswinkel der feldorientierten Regelung des dreiphasigen Wechselrichters 6 auf 90° wird gleichzeitig die q-Stromkomponente $i_q$ als Steuerstrom in die Phase des Ausgangs U des dreiphasigen Wechselrichters 6 eingeprägt, von wo aus sich diese q-Stromkomponente $i_q$ zu gleichen Teilen auf die beiden Phasen der Ausgänge V und W des dreiphasigen Wechselrichters aufteilt (FIG 7). In FIG 8 sind die Verteilungen der d- und q-Stromkomponenten $i_d$ und $i_q$ zusammen dargestellt, wobei eine resultierende Stromverteilung bei Vollaussteuerung in FIG 9 veranschaulicht ist. Ein Vergleich der FIG 4 und 9 zeigt, dass bei Vollaussteuerung des umrichtergespeisten Magnetlagers 2 sich die gleiche Differenz der Stromverteilung zwischen den beiden Spulen 12 und 14 des Magnetlagers 2 ergibt. Das heißt, bei Vollaussteuerung ergibt sich kein Unterschied bei der Effektivstrombelastung des dreiphasigen Wechselrichters 6. Dies zeigt außerdem das Diagramm in der FIG 11, in dem jeweils der Effektivstrom $i_{effA}$ gemäß bekanntem Verfahren und der Effektivstrom $i_{effN}$ gemäß erfindungsgemäßem Verfahren über den Aussteuergrad des Magnetlagers 2 dargestellt sind. Ist der Aussteuergrad Null, wird annähernd eine Halbierung der Effektivstrombelastung des dreiphasigen Wechselrichters 6 erreicht.

In Bezug auf den Steuerstrom ($i_q$-Stromkomponente der feldorientierten Regelung des dreiphasigen Wechselrichters 6) des Magnetlagers 2 liegen die beiden Spulen 12 und 14 des umrichtergespeisten Magnetlagers 2 parallel an der Phase des Ausgangs U des dreiphasigen Wechselrichters 6 an. Um eine schnellste Änderung der drehmomentbildenden Stromkomponente $i_q$ (Steuerstrom des Magnetlagers) zu erreichen, wird der Ausgang U des Wechselrichters 6 auf Bezugspotential des Umrichters 4 gelegt und die Zwischenkreisspannung $U_{ZK}$ auf die beiden Ausgänge V und W des dreiphasigen Wechselrichters 6 durchgeschaltet (FIG 10). Die Stromänderungsgeschwindigkeit ergibt sich nun, da die Zwischenkreisspannung $U_{ZK}$ nicht mehr auf die Serienschaltung der beiden Spulen 12 und 14 des Magnetlagers 2 geschaltet ist, sondern an jede der beiden Spulen 12 und 14 des umrichtergespeisten Magnetlagers 2 angelegt wird, gemäß folgender Gleichung:

$$\frac{\Delta I}{\Delta t} = \frac{U_{ZK}}{1 \cdot L}$$

Somit steht der Stromänderung beim erfindungsgemäßen Verfahren zum Betrieb eines dreiphasigen Wechselrichters 6 eines umrichtergespeisten Magnetlagers 2 nur noch eine Induktivität L entgegen. Gegenüber dem bekannten Verfahren verdoppelt sich somit die Stromanstiegsgeschwindigkeit beim erfindungsgemäßen Betrieb des dreiphasigen Wechselrichters 6 eines umrichtergespeisten Magnetlagers 2.

Mit der erfindungsgemäßen Festlegung des Transformationswinkels der feldorientierten Regelung des dreiphasigen Wechselrichters 6 auf 90° konstant ist in Richtung der q-Stromkomponente $i_q$ (Steuerstrom des Magnetlagers) eine kleine Induktivität wirksam, wogegen in Richtung der d-Stromkomponente $i_d$ (Vormagnetisierung des Magnetlagers) eine große Induktivität wirksam ist. D.h., es handelt sich bei der Spulenkonfiguration des umrichtergespeisten Magnetlagers 2 um eine unsymmetrische Drehstromwicklung. Dies hat zur Folge, dass die Induktivität, auf die der Wechselrichter 6 des Magnetlagers 2 speisenden Umrichters 4 arbeitet, vom Drehfeldwinkel abhängig ist. Die Unsymmetrie hat ungünstige Auswirkungen auf das Betriebsverhalten. Um dieses Problem zu lösen, werden gemäß dem Stand der Technik für die d- und q-Stromkomponenten den Stromregelkanälen unterschiedliche Stromverstärkungen vorgegeben. Im Unterschied zum Stand der Technik wird die Proportionalverstärkung des Stromregelkanals der d-Stromkomponente $i_d$ größer eingestellt als diejenige des Stromregelkanals der q-Stromkomponente $i_q$. Als bevorzugtes Verhältnis zwischen diesen beiden Proportionalverstärkungen kann ein Verhältnis zwischen 2:1 bis 4:1 gewählt werden.

Durch die erfindungsgemäße Verteilung der d- und q-Stromkomponenten, die durch Vorgabe eines Transformationswinkels (Rotorlagewinkel eines Synchronmotors) der feldorientierten Regelung des dreiphasigen Wechselrichters 6 auf 90° konstant gegenüber 0° konstant gemäß dem bekannten Verfahren bewerkstelligt wird, wird erreicht, dass die Effektivstrombelastung des Wechselrichters 6 des das Magnetlager 2 speisenden Umrichters 4 erheblich günstiger wird. Bei einer Aussteuerung von 0% halbiert sich fast die Belastung des Wechselrichters 6. Außerdem wird erreicht, dass die Stromanstiegsgeschwindigkeit des Steuerstroms des umrichtergespeisten Magnetlagers 2 sich verdoppelt, wodurch das umrichtergespeiste Magnetlager 2, das mit dem erfindungsgemäßen Verfahren betrieben wird, wesentlich dynamischer auf Lageänderungen reagieren kann.

**Patentansprüche**

1. Verfahren zum Betrieb eines dreiphasigen Wechselrichters (6) eines umrichtergespeisten Magnetlagers (2), dessen an einem oberen Magnetanker (8) befindliche Spule (12) mit ihrem ersten Anschluss (20) mit einem ersten Ausgang (W) des Wechselrichters (6) verknüpft ist und dessen an einem unteren Magnetanker (10) befindliche Spule (14) mit ihrem ersten Anschluss (22) mit einem zweiten Ausgang (V) des Wechselrichters (6) verknüpft ist und die beiden Spulen (12,14) mit ihrem jeweiligen zweiten Anschluss (24,26) mit einem dritten Ausgang (U) des Wechselrichters (6) verknüpft sind, **da-durch gekennzeichnet**, dass ein veränderlicher Steuerstrom in den dritten Ausgang (U) des dreiphasigen Wechselrichters (6) eingeprägt wird und sich auf die Spulen (12,14) und den jeweils mit ihnen verknüpften anderen Ausgängen (W,V) des dreiphasigen Wechselrichters (6) aufteilt sowie ein konstanter Vormagnetisierungsstrom in den ersten Ausgang (W) und den zweiten Ausgang (V) des dreiphasigen Wechselrichters (6) und den mit ihnen verknüpften, in Reihe liegenden Spulen (12,14) eingeprägt wird, in Folge dessen sich aus der Differenz des veränderlichen Steuerstroms und des konstanten Vormagnetisierungsstroms, in Abhängigkeit von deren Vorzeichen, in den Spulen (12,14) und den mit ihnen verknüpften beiden Ausgängen (W,V) entsprechende Phasenströme ($i_w$, $i_v$) einstellen.

2. Verfahren nach Anspruch 1, **dadurch gekennzeichnet,** dass ein Transformationswinkel einer feldorientierten Regelung des Wechselrichters (6) des umrichtergespeisten Magnetlagers (2) derart eingefroren wird, dass die kraftbildende Achse fest und unveränderlich in Richtung der Phase des dritten Ausgangs (U) dieses Wechselrichters (6) zeigt.

3. Verfahren nach einem der Ansprüche 1 oder 2, **dadurch gekennzeichnet**, dass der veränderliche Steuerstrom als eine q-Stromkomponente ($i_q$) und der konstante Vormagnetisierungsstrom als eine d-Stromkomponente ($i_d$) der feldorientierten Regelung in die jeweiligen Ausgänge (U,V,W) des Wechselrichters (6) eingeprägt werden.

4. Verfahren nach Anspruch 3, **da-durch gekennzeichnet**, dass zur Erreichung der schnellsten Änderung der drehmomentbildenden q-Stromkomponente ($i_q$) der dritte Ausgang (U) des Wechselrichters (6) auf ein Bezugspotential eines Umrichters (4) gelegt und eine Zwischenkreisspannung ($U_{ZK}$) des Umrichters (4) auf die beiden anderen Ausgänge (V, W) des Wechselrichters (6) durchgeschaltet wird.

5. Verfahren nach einem der Ansprüche 3 oder 4, **da-durch gekennzeichnet**, dass zur Vermeidung einer Unsymmetrie, hervorgerufen durch die Anschaltung der Spulen (12,14) des Magnetlagers (2) am Wechselrichter (6), ein Verhältnis der Proportionalverstärkungen zwischen dem Stromreglerkanal der d-Stromkomponente ($i_d$) und dem Stromreglerkanal der q-Stromkomponente ($i_q$) von 2:1 bis 4:1 gewählt wird.

## Claims

1. Method for operating a three-phase inverter (6) of a converter-fed magnetic bearing (2), the coil (12) of which located at an upper magnetic armature (8) is connected by its first connection (20) to a first output (W) of the inverter (6) and the coil (14) of which located at a lower magnetic armature (10) is connected by its first connection (22) to a second output (V) of the inverter (6) and the two coils (12, 14) are connected by their respective second connection (24, 26) to a third output (U) of the inverter (6), **characterised in that** a variable control current is injected into the third output (U) of the three-phase inverter (6) and divides itself between the coils (12, 14) and the other outputs (W, V) of the three-phase inverter (6) connected thereto respectively and a constant bias current is injected into the first output (W) and the second output (V) of the three-phase inverter (6) and the coils (12, 14) in series therewith and connected thereto, as a result of which corresponding phase currents ($i_W$, $i_V$) develop from the difference in the variable control current and the constant bias current, as a function of their prefix, in the coils (12, 14) and the phase currents $i_W$, $i_V$ corresponding to both outputs (W, V) connected thereto.

2. Method according to claim 1, **characterised in that** a transformation angle of a field-oriented regulation of the inverter (6) of the converter-fed magnetic bearing (2) is frozen such that the force-forming axis permanently and invariably points in the direction of a phase of the third output (U) of this inverter (6).

3. Method according to one of claims 1 or 2, **charac-**

**terised in that** the variable control current and the constant bias current are injected into the respective outputs (U, V, W) of the inverter (6) as a q-current component ($i_q$) and as a d-current component ($i_d$) of the field-oriented regulation in each instance.

4. Method according to claim 3, **characterised in that** in order to achieve the quickest change in the torque-forming q-current component (iq), the third output (U) of the inverter (6) is applied to a reference potential of a converter (4) and an intermediate circuit voltage ($U_{ZK}$) of the converter (4) is switched through to the two other outputs (V, W) of the inverter (6) .

5. Method according to one of claims 3 or 4, **characterised in that** in order to prevent non-symmetry, caused by the powering-on of the coils (12, 14) of the magnetic bearing (2) on the inverter (6), a ratio of the proportional amplifications between the current regulation channel of the d-current component ($i_q$) and the current regulation channel of the q-current component ($i_q$) of 2:1 to 4:1 is selected.

## Revendications

1. Procédé pour faire fonctionner un onduleur ( 6 ) triphasé d'un palier ( 2 ) magnétique, qui est alimenté par un convertisseur, dont une bobine ( 12 ) se trouvant sur une armature ( 8 ) magnétique supérieure est reliée par sa première borne ( 20 ) à un première sortie ( W ) de l'onduleur ( 6 ) et dont une bobine ( 14 ) se trouvant sur une armature ( 10 ) magnétique inférieure est reliée par sa première borne ( 22 ) à une deuxième sortie ( V ) de l'onduleur ( 6 ) et les deux bobines ( 12, 14 ) sont reliées par leur deuxième borne ( 24, 26 ) respective à une troisième sortie ( U ) de l'onduleur ( 6 ), **caractérisé en ce qu'**on applique un courant de commande variable à la troisième sortie ( U ) de l'onduleur ( 6 ) triphasé et on le répartit sur les bobines ( 12, 14 ) et les autres sorties ( W, V ) ) qui leur sont reliées respectivement de l'onduleur ( 6 ) triphasé, ainsi qu'on applique un courant constant de prémagnétisation à la première sortie ( W ), à la deuxième sortie ( V ) de l'onduleur ( 6 ) triphasé et aux bobines ( 12, 14 ) en série qui leur sont reliées, à la suite de quoi, il s'établit, à partir de la différence du courant de commande variable et du courant de prémagnétisation constant en fonction de leur signe dans les bobines ( 12, 14 ) et les deux sorties ( W, V ) qui leur sont reliées, des courants ( $i_W$, $i_V$ ) de phase correspondants.

2. Procédé suivant la revendication 1, **caractérisé en ce qu'**on gèle un angle de transformation d'une régulation par champ de l'onduleur ( 6 ) du palier ( 2 ) magnétique alimenté par un convertisseur, de manière à ce que l'axe de formation de force pointe de manière fixe et invariable en direction de la phase de la troisième sortie ( U ) de cet onduleur ( 6 ).

3. Procédé suivant l'une des revendications 1 à 2, **caractérisé en ce qu'**on applique le courant de commande variable sous la forme d'une composante ( $i_q$ ) de courant q et le courant de prémagnétisation constant sous la forme d'une composante ( $i_d$ ) de courant d de la régulation par champ aux sorties ( U, V, W ) respectives de l'onduleur ( 6 ).

4. Procédé suivant la revendication 3, **caractérisé en ce que**, pour obtenir la variation la plus rapide de la composante ( $i_q$ ) de courant q formant le couple de rotation, on met la troisième sortie ( U ) de l'onduleur ( 6 ) à un potentiel de référence d'un convertisseur ( 4 ) et on applique une tension ( $U_{ZK}$ ) de circuit intermédiaire du convertisseur ( 4 ) aux deux autres sorties ( V, W ) de l'onduleur ( 6 ).

5. Procédé suivant l'une des revendications 3 ou 4, **caractérisé en ce que**, pour éviter une dissymétrie provoquée par le branchement des bobines ( 12, 14 ) du palier ( 2 ) magnétique sur l'onduleur ( 6 ), on choisit un rapport des amplifications proportionnelles entre le canal régleur de courant de la composante ( $i_d$ ) de courant d et le canal régleur de courant de la composante ( $i_q$ ) de courant q de 2:1 à 4:1.

## FIG 1

**FIG 2**

**FIG 3**

**FIG 4**

**FIG 5**

**FIG 6**

**FIG 7**

FIG 8

FIG 9

FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007028229 B3